# EUROPEAN PATENT APPLICATION

(11) **EP 3 653 311 A1**
(43) Date of publication of application: **20.05.2020**
(21) Application number: 18831295.3
(22) Date of filing: 13.07.2018
(51) Int. Cl.: B09B 3/00, C01B 32/324, C10B 47/44

(54) **ORGANIC MATTER MULTISTAGE UTILIZATION DEVICE AND ORGANIC MATTER MULTISTAGE UTILIZATION METHOD**

(30) Priority: 13.07.2017 JP 2017136731
(71) Applicant: Your Energy Development Co. Ltd., Tokyo 101-0054 (JP)
(72) Inventor: KONZO, Noriyoshi, Tokyo 152-0023 (JP); ONO, Takashi, Niigata 943-0807 (JP)
(74) Representative: Körfer, Thomas
(86) International application number: PCT/JP2018/026465
(87) International publication number: WO 2019/013318

(57) **Abstract**

A multistep utilizing apparatus of organic matter of the present invention includes a cylinder 10 having an inputting portion 11 and a taking out portion 12, a screw 20, temperature adjusting portions 13, moisture-discharging pressure adjusting portions 14, gas-discharging pressure adjusting portions 15 and liquid separators 16. Sear portions 21 for atomizing inputs by the screw 20 and compressing portions 22 for compressing the input which is atomized by the shear portions 21 are formed in the cylinder 10. In the taking out portion 12, solid substance from which excessive moisture and thermally decomposed gas are taken out from the input are discharged, and the present invention has high energy efficiency, and can produce functional composite material from fuel concerning multistep utilization of organic matter.

## Description

### [TECHNICAL FIELD]

The present invention relates to an apparatus and a method to utilize organic matter in a multistep manner.

### [BACKGROUND TECHNIQUE]

Organic matter such as biomass has high combustion heat and thus, it is conventionally utilized for energy. Since the organic matter includes light-weighted and high strength cellulose, it is utilized also as forming material.

Since the biomass is originally produced by importing carbon dioxide from atmosphere, even when the biomass is burned, it is carbon-neutral resource which does not increase carbon dioxide density in atmosphere unlike a case where fossil fuel is burned. Therefore, at present, research for utilizing such carbon-neutral biomass from both energy aspect and composite material aspect is advanced.

Further, many composite materials are produced also from chemically synthesized organic matter, and research concerning recycle of the composite materials is also advanced.

Among such attempts, there is proposed a heat decomposition type apparatus capable of sufficiently separating gas component, tar component and carbide component from organic matter from the standpoint of energy utilization (patent document 1 for example).

Further, from the standpoint of composite material utilization of biomass, a composite material acquiring apparatus for atomizing to dissolve aggregated structure of the biomass is proposed (patent document 2 for example).

### [PRIOR ART DOCUMENT]

### [PATENT DOCUMENT]

[Patent Document 1] Japanese Patent Application Laid-open No.2016-94590
[Patent Document 2] Japanese Patent No.5865539

### [SUMMARY OF THE INVENTION]

### [PROBLEM TO BE SOLVED BY THE INVENTION]

Patent document 1 discloses a technique to obtain activated carbon from gas component by a combustion furnace which generates high temperature combustion gas, a pyrolyzer which separates organic matter into generated gas and carbide by indirect heating, and an activated carbon activating furnace which guides high temperature combustion gas into the carbide.

However, since a furnace is used for heat decomposition and activated carbon activation, although granular activated carbon having a large particle diameter can be obtained, energy efficiency is poor. Further, to acquire the composite material, it is necessary to carry out atomizing processing.

Patent document 2 discloses a technique to destroy an aggregated structure of solid material by latent heat held by high pressure steam by introducing high pressure steam into a hermetic container and mixing the steam with the solid material, thereby atomizing and dispersing the same.

However, since it is finely dispersed in the compounded material, energy efficiency is high, reduction of molecular weight of biomass is suppressed, rigidity is high, but material having high function like activated carbon is not converted, the amount of gas generated by heat decomposition is small, and it is difficult to utilize energy as fuel.

The present invention has been accomplished in view of such circumstances, and it is an object of the invention to provide a multistep utilizing apparatus of organic matter and a multistep utilizing method of organic matter which has high energy efficiency, and which can produce functional composite material from fuel concerning multistep utilization of organic matter.

### [MEANS FOR SOLVING THE PROBLEM]

The invention described in a first aspect provides a multistep utilizing apparatus of organic matter including: a cylinder including an inputting portion for throwing in an input including organic matter-derived material and a taking out portion for taking out the input; a screw which axial-rotates in an interior of the cylinder and which extrudes the input from the inputting portion toward the taking out portion; a temperature adjusting portion for adjusting temperature of the input in the cylinder to set temperature; a moisture-discharging pressure adjusting portion for taking out, by set pressure, excessive moisture included in the input in the cylinder; a gas-discharging pressure adjusting portion for taking out, by set pressure, thermally decomposed gas generated when the input in the cylinder is thermally decomposed; and a liquid separator for separating liquid which is obtained by cooling the thermally decomposed gas taken out by the gas-discharging pressure adjusting portion; wherein a shear portion which atomizes the input and a compressing portion for compressing the input which is atomized by the shear portion are formed in the cylinder by the screw, and in the taking out portion, solid substance from which the excessive moisture and the thermally decomposed gas are taken out from the input is discharged.

According to the invention described in a second aspect, in the multistep utilizing apparatus of organic matter of the first aspect, the temperature adjusting portion placed at the compressing portion includes heating means for bringing the set temperature to 600°C or higher.

According to the invention described in a third aspect, the multistep utilizing apparatus of organic matter of the first or second aspect further includes press fitting means for throwing in superheated steam of 200°C or higher and/or pressurized hot water of 120°C or higher.

According to the invention described in a fourth aspect, in the multistep utilizing apparatus of organic matter of any one of the first to third aspects, the gas-discharging pressure adjusting portion includes a pipe which can be attached to and detached from the cylinder, a surface of the pipe which comes into contact with the interior of the cylinder has sintered metal, and the liquid separator includes a spiral pipe which comes into communication with the pipe and cooling means for cooling the spiral pipe.

A multistep utilizing method of organic matter of the invention described in a fifth aspect includes: a shearing step of atomizing an input including organic matter-derived material; a moisture adjusting step of taking out excessive moisture from the input which is atomized in the shearing step; a thermally decomposing step of generating thermally decomposed gas by heating the input after the moisture adjusting step; a gas recovering step of taking out, by set pressure, the thermally decomposed gas generated in the thermally decomposing step; a liquid recovering step of separating liquid which is obtained by cooling the thermally decomposed gas taken out in the gas recovering step; and a solid substance recovering step of taking out solid substance after the thermally decomposed gas is taken out from the input in the gas recovering step.

According to the invention described in a sixth aspect, in the multistep utilizing method of organic matter of the fifth aspect, set temperature in the moisture adjusting step is 200°C or higher, set temperature in the thermally decomposing step is 230°C or higher, and set pressure in the gas recovering step is 1 Mpa or higher.

According to the invention described in a seventh aspect, the multistep utilizing method of organic matter of the fifth or sixth aspect further includes a press fitting step for throwing in pressurized hot water of 120°C or higher and 300°C or lower after the moisture adjusting step and before the gas recovering step.

According to the invention described in a eighth aspect, in the multistep utilizing method of organic matter of any one of the fifth to seventh aspects, the solid substance which is taken out in the solid substance recovering step is activated carbon.

According to the invention described in a ninth aspect, in the multistep utilizing method of organic matter of any one of a the fifth to eighth aspects, the input includes hydrocarbon compound having boiling temperature of 300°C or higher, and in the shearing step, the input including the hydrocarbon compound is kneaded at set temperature.

### [EFFECT OF THE INVENTION]

The present invention enhances energy efficiency in heat decomposition of organic matter, and by organic matter-derived material, the invention also provides a technique to provide efficient fuel and a technique to acquire composite material having excellent functionality. The invention also provides an efficient recycle technique of compound material including chemically synthesized organic compound.

### [BRIEF DESCRIPTION OF THE DRAWINGS]

Fig. 1 is a schematic diagram showing an embodiment of a multistep utilizing apparatus of organic matter according to the present invention; and
Fig. 2 is a flowchart for describing a multistep utilizing method of organic matter according to the embodiment.

### [MODE FOR CARRYING OUT THE INVENTION]

An embodiment of the present invention will be described below based on the drawings.

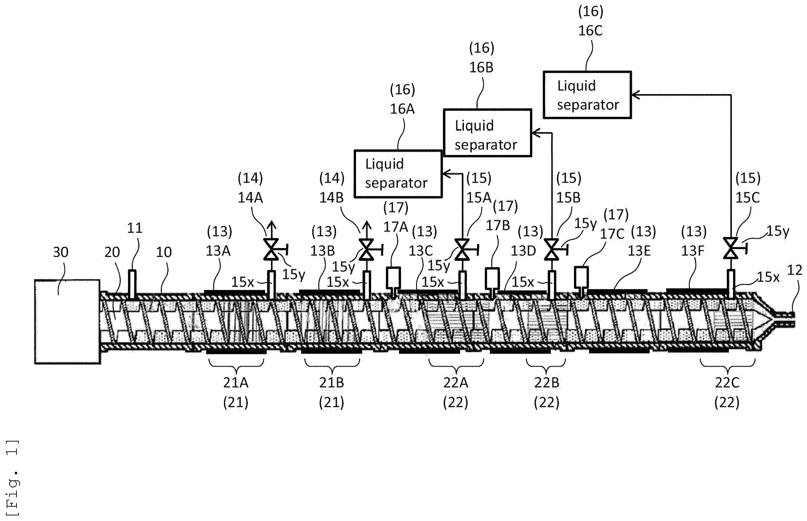

As shown in Fig. 1, a multistep utilizing apparatus of organic matter according to the embodiment includes a cylinder 10, a screw 20 which axial-rotates in the cylinder 10 and sends an input from upstream to downstream, and driving means 30 for axial-rotating the screw 20.

The cylinder 10 includes an inputting portion 11 for inputting the input including organic matter-derived material, and a taking out portion 12 for taking out the input. The organic matter-derived material is food residue or polluted mud, and it is preferable that wooden chip is included in the input.

Temperature adjusting portions 13 which adjust temperature of input in the cylinder 10 into set temperature are provided on an outer periphery of the cylinder 10. The temperature adjusting portions 13 include heating means.

The cylinder 10 includes moisture-discharging pressure adjusting portions 14, gas-discharging pressure adjusting portions 15, liquid separators 16 and press fitting means 17.

The moisture-discharging pressure adjusting portions 14 take excessive moisture included in the input in the cylinder 10 to outside of the cylinder 10 by set pressure. This embodiment includes a first moisture-discharging pressure adjusting portion 14A and a second moisture-discharging pressure adjusting portion 14B as the moisture-discharging pressure adjusting portions 14. The first moisture-discharging pressure adjusting portion 14A is placed upstream of the second moisture-discharging pressure adjusting portion 14B.

The gas-discharging pressure adjusting portions 15 take thermally decomposed gas generated when the input in the cylinder 10 is thermally decomposed to outside of the cylinder 10 by set pressure. This embodiment includes a first gas-discharging pressure adjusting portion 15A, a second gas-discharging pressure adjusting portion 15B and a third gas-discharging pressure adjusting portion 15C as the gas-discharging pressure adjusting portions 15. The first gas-discharging pressure adjusting portion 15A is placed upstream of the second gas-discharging pressure adjusting portion 15B, and the second gas-discharging pressure adjusting portion 15B is placed upstream of the third gas-discharging pressure adjusting portion 15C.

The liquid separators 16 cool thermally decomposed gas which is taken out by the gas-discharging pressure adjusting portions 15, and separates liquid obtained when the thermally decomposed gas is cooled. This embodiment includes a first liquid separator 16A, a second liquid separator 16B and a third liquid separator 16C as the liquid separators 16. The first liquid separator 16A cools thermally decomposed gas taken out by the first gas-discharging pressure adjusting portion 15A, the second liquid separator 16B cools thermally decomposed gas taken out by the second gas-discharging pressure adjusting portion 15B, and the third liquid separator 16C cools thermally decomposed gas taken out by the third gas-discharging pressure adjusting portion 15C.

The press fitting means 17 throw superheated steam of 200°C or higher and/or pressurized hot water of 120°C or higher into the cylinder 10 from outside of the cylinder 10. This embodiment includes first press fitting means 17A, second press fitting means 17B and third press fitting means 17C as the press fitting means 17. The first press fitting means 17A is placed upstream of the second press fitting means 17B, and the second press fitting means 17B is placed upstream of the third press fitting means 17C. Although it is not illustrated in the drawing, means for sending pressurized hot water and superheated steam are connected to the press fitting means 17.

In the cylinder 10, by the screw 20, shear portions 21 for atomizing inputs, and compressing portions 22 for compressing inputs which are atomized by the shear portions 21 are formed. Each of the shear portions 21 has cutter function on a blade of the screw 20. Each of the compressing portions 22 has compressing function by changing extruding speed of the blades of the screw 20 for example.

This embodiment includes a first shear portion 21A and a second shear portion 21B as the shear portions 21. The first shear portion 21A is placed upstream of the second shear portion 21B.

This embodiment includes a first compressing portion 22A, a second compressing portion 22B and a third compressing portion 22C as the compressing portions 22. The first compressing portion 22A is placed upstream of the second compressing portion 22B, and the second compressing portion 22B is placed upstream of the third compressing portion 22C.

The driving means 30 is a power source which is connected to one end of the screw 20. The driving means 30 axial-rotates the screw 20. The screw 20 is not limited to one having a single shaft, and two or more screws 20 may be composed in parallel.

If raw material (input) including organic matter-derived material is thrown in, the raw material is sent from the upstream inputting portion 11 to the downstream taking out portion 12 by the screw 20 which axial-rotates in the cylinder 10.

The temperature adjusting portions 13 are placed at locations of the cylinder 10 from the inputting portion 11 to the taking out portion 12. Each of the temperature adjusting portions 13 can adjust temperature of the input to set temperature which corresponds to intended reaction.

For example, a first temperature adjusting portion 13A is placed upstream of the first moisture-discharging pressure adjusting portion 14A corresponding to the first shear portion 21A. A second temperature adjusting portion 13B is placed upstream of the second moisture-discharging pressure adjusting portion 14B corresponding to the second shear portion 21B. A third temperature adjusting portion 13C is placed upstream of the first gas-discharging pressure adjusting portion 15A corresponding to the first compressing portion 22A. A fourth temperature adjusting portion 13D is placed upstream of the second gas-discharging pressure adjusting portion 15B corresponding to the second compressing portion 22B. A fifth temperature adjusting portion 13E is placed upstream of the third gas-discharging pressure adjusting portion 15C and the third compressing portion 22C. A sixth temperature adjusting portion 13F is placed upstream of the third gas-discharging pressure adjusting portion 15C corresponding to the third compressing portion 22C.

The first shear portion 21A is placed upstream of the first moisture-discharging pressure adjusting portion 14A, and the second shear portion 21B is placed upstream of the second moisture-discharging pressure adjusting portion 14B.

The compressing portions 22 is placed downstream of the moisture-discharging pressure adjusting portions 14.

The gas-discharging pressure adjusting portions 15 are provided in sections of the compressing portions 22. That is, the first gas-discharging pressure adjusting portion 15A, the second gas-discharging pressure adjusting portion 15B and the third gas-discharging pressure adjusting portion 15C are provided in sections from the first compressing portion 22A to the third compressing portion 22C. In this embodiment, the first gas-discharging pressure adjusting portion 15A is provided on the first compressing portion 22A, and the third gas-discharging pressure adjusting portion 15C is provided on the third compressing portion 22C.

In this manner, inputs which are thrown in from the inputting portion 11 are atomized by the shear portions 21, temperatures of the inputs are adjusted by the temperature adjusting portions 13, and excessive moisture is taken out from the cylinder 10 in the moisture-discharging pressure adjusting portions 14 by set pressure. When the plurality of moisture-discharging pressure adjusting portions 14 are provided, for example, when the first moisture-discharging pressure adjusting portion 14A and the second moisture-discharging pressure adjusting portion 14B are provided as in this embodiment, efficiency of taken out heat of the excessive moisture can be enhanced by setting the set pressure of the upstream first moisture-discharging pressure adjusting portion 14A higher than that of the second moisture-discharging pressure adjusting portion 14B.

The input from which the excessive moisture thereof is taken out and which is atomized is thermally decomposed by the set temperature in the compressing portions 22. The set temperature in the compressing portions 22 can be 600°C or higher. It is known that in this temperature setting, generation of thermally decomposed gas becomes extremely large. Thermally decomposed gas and vapor are taken out from the interior of the cylinder 10 by the set pressure in the gas-discharging pressure adjusting portions 15. The taken out thermally decomposed gas and the like are cooled by the liquid separators 16 and liquid is taken out.

When the plurality of compressing portions 22 and the plurality of gas-discharging pressure adjusting portions 15 are provided, a ratio of low viscosity liquid which is taken out in the liquid separators 16 can be increased by lowering the set temperature of the upstream section.

That is, in this embodiment, the set temperature of the third temperature adjusting portion 13C is set lower than that of the fourth temperature adjusting portion 13D, the set temperature of the fourth temperature adjusting portion 13D is set lower than that of the fifth temperature adjusting portion 13E, and the set temperature of the fifth temperature adjusting portion 13E is set lower than that of the sixth temperature adjusting portion 13F. According to this, the set temperature of the first compressing portion 22A is set lower than that of the second compressing portion 22B, and the set temperature of the second compressing portion 22B is set lower than that of the third compressing portion 22C.

In this manner, temperature of an input in the compressing portions 22 can efficiently be brought into the set temperature, and reactive property thereof can be enhanced.

If the set temperature of the compressing portions 22 is made 600°C or higher, gas which is gaseous matter at ambient temperature can efficiently be taken out from the gas-discharging pressure adjusting portions 15.

In the taking out portion 12, a solid substance from which excessive moisture and thermally decomposed gas are taken out is discharged from an input.

The first press fitting means 17A is placed upstream of the first compressing portion 22A, the second press fitting means 17B is placed upstream of the second compressing portion 22B, and the third press fitting means 17C is placed upstream of the third compressing portion 22C.

If any one of pressurized hot water of 120°C or higher and superheated steam of 200°C or higher is thrown in by the press fitting means 17 at a location upstream of the compressing portions 22, gas which is gaseous matter at ambient temperature is efficiently taken out from the gas-discharging pressure adjusting portions 15.

Each of the gas-discharging pressure adjusting portions 15 includes a pipe 15x which can be attached to and detached from the cylinder 10. A surface of the pipe 15x which comes into contact with an interior of the cylinder 10 includes a sintered metal. Pressure of the pipe 15x is set by a valve 15y, and the pipe 15x is in communication with a spiral pipe (not shown) of the liquid separator 16. Although it is not illustrated in the drawing, each of the liquid separators 16 includes a spiral pipe, cooling means for cooling the spiral pipe, liquid taking out means for taking out liquid, and gas taking out means for taking out gas.

The sintered metal plays a role of a filter which comes into contact with the interior of the cylinder, the sintered metal is preferable in terms of maintenance but other material may be employed. The spiral pipe is for efficiently cooling taken out gas, but other material may be employed.

The input including organic matter-derived material which is thrown in into the interior of the cylinder 10 is used as raw material, reaction is continuously and efficiently controlled, and it is possible to continuously take out gas which can be utilized as energy, liquid which can be utilized as fuel, and solid substance which can be utilized for composite material and the like.

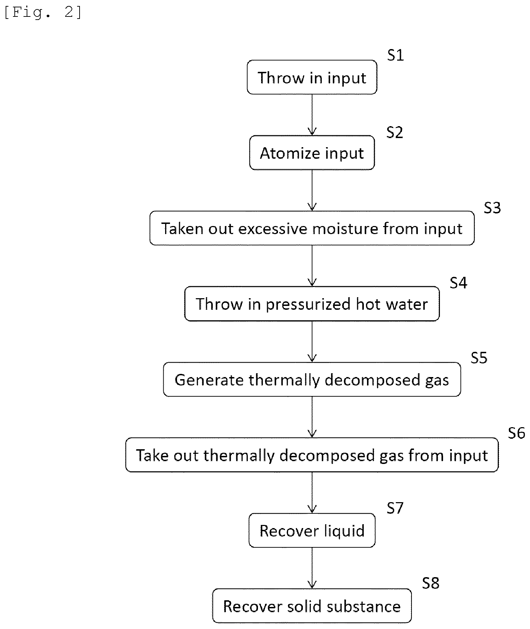

Fig. 2 is a flowchart for describing a multistep utilizing method of organic matter according to the embodiment.

An input including organic matter-derived material is thrown in from the inputting portion 11 (throwing in step 1).

The input which is thrown in in throwing in step 1 is atomized in the shear portion 21 (shearing step 2).

The input which is thrown in in throwing in step 1 is adjusted in temperature to predetermined temperature (preferably 200°C or higher) by the temperature adjusting portion 13, and excessive moisture included in the input is taken out from the cylinder 10 by the moisture-discharging pressure adjusting portion 14 (moisture adjusting step 3).

After moisture adjusting step 3, pressurized hot water of 120°C or higher and 300°C or lower is thrown in by the press fitting means 17 (press fitting step 4).

After press fitting step 4, the input is heated to set temperature (preferably 230°C or higher), thereby generating thermally decomposed gas (heat decomposition step 5).

The thermally decomposed gas generated in heat decomposition step 5 is taken out by set pressure (preferably 1 Mpa or higher) from the cylinder 10 by the gas-discharging pressure adjusting portion 15 (gas recovering step 6).

The thermally decomposed gas taken out in gas recovering step 6 is cooled by the liquid separator 16, and liquid obtained by the cooling operation is separated (liquid recovering step 7).

Solid substance after thermally decomposed gas is taken out from the input in gas recovering step 6 is discharged from the taking out portion 12 (solid substance recovering step 8).

The present invention is configured by the above-described steps. According to this, the present invention can be carried out not only in the multistep utilizing apparatus of organic matter but also in a batch type reaction apparatus utilizing a hermetic container. If the invention is carried out under a preferable condition, water can be utilized in a subcritical state.

The solid substance discharged from the taking out portion 12 can be made as activated carbon by throwing in pressurized hot water and by setting pressure in gas recovering step 6.

Hydrocarbon compound having boiling temperature of 300°C or higher is included in the input, and if the input including hydrocarbon compound is kneaded at set temperature in shearing step 2, solid substance can be taken out as a forming pellet of thermoplastic composite material. As the input including hydrocarbon compound of boiling temperature of 300°C or higher, composite material including chemically synthesized organic compound can be used, and it can be utilized as recycle of composite material which is difficult to be recycled.

### [EXPLANATION OF SYMBOLS]

- 10: cylinder
- 11: inputting portion
- 12: taking out portion
- 13: temperature adjusting portion
- 13A: first temperature adjusting portion
- 13B: second temperature adjusting portion
- 13C: third temperature adjusting portion
- 13D: fourth temperature adjusting portion
- 13E: fifth temperature adjusting portion
- 13F: sixth temperature adjusting portion
- 14: moisture-discharging pressure adjusting portion
- 14A: first moisture-discharging pressure adjusting portion
- 14B: second moisture-discharging pressure adjusting portion
- 15: gas-discharging pressure adjusting portion
- 15A: first gas-discharging pressure adjusting portion
- 15B: second gas-discharging pressure adjusting portion
- 15C: third gas-discharging pressure adjusting portion
- 15x: pipe
- 15Y: valve
- 16: liquid separator
- 16A: first liquid separator
- 16B: second liquid separator
- 16C: third liquid separator
- 17: press fitting means
- 17A: first press fitting means
- 17B: second press fitting means
- 17C: third press fitting means
- 20: screw
- 21: shear portion
- 21A: first shear portion
- 21B: second shear portion
- 22: compressing portion
- 22A: first compressing portion
- 22B: second compressing portion
- 22C: third compressing portion
- 30: driving means

## Claims

1. A multistep utilizing apparatus of organic matter comprising:
a cylinder (10) including an inputting portion (11) for throwing in an input including organic matter-derived material and a taking out portion (12) for taking out the input;
a screw (20) which axial-rotates in an interior of the cylinder (10) and which extrudes the input from the inputting portion (11) toward the taking out portion (12);
a temperature adjusting portion (13) for adjusting temperature of the input in the cylinder (10) to set temperature;
a moisture-discharging pressure adjusting portion (14) for taking out, by set pressure, excessive moisture included in the input in the cylinder (10);
a gas-discharging pressure adjusting portion (15) for taking out, by set pressure, thermally decomposed gas generated when the input in the cylinder (10) is thermally decomposed; and
a liquid separator (16) for separating liquid which is obtained by cooling the thermally decomposed gas taken out by the gas-discharging pressure adjusting portion (15); wherein
a shear portion (21) which atomizes the input and a compressing portion (22) for compressing the input which is atomized by the shear portion (21) are formed in the cylinder (10) by the screw (20), and
in the taking out portion (12), solid substance from which the excessive moisture and the thermally decomposed gas are taken out from the input is discharged.

2. The multistep utilizing apparatus of organic matter according to claim 1, wherein the temperature adjusting portion (13) placed at the compressing portion (22) includes heating means for bringing the set temperature to 600°C or higher.

3. The multistep utilizing apparatus of organic matter according to claim 1 or 2, further comprising press fitting means for throwing in superheated steam of 200°C or higher and/or pressurized hot water of 120°C or higher.

4. The multistep utilizing apparatus of organic matter according to any one of claims 1 to 3, wherein the gas-discharging pressure adjusting portion (15) includes a pipe (15x) which can be attached to and detached from the cylinder (10),
a surface of the pipe (15x) which comes into contact with the interior of the cylinder (10) has sintered metal, and
the liquid separator (16) includes a spiral pipe which comes into communication with the pipe (15x) and cooling means for cooling the spiral pipe.

5. A multistep utilizing method of organic matter comprising: a shearing step of atomizing an input including organic matter-derived material;
a moisture adjusting step of taking out excessive moisture from the input which is atomized in the shearing step;
a thermally decomposing step of generating thermally decomposed gas by heating the input after the moisture adjusting step;
a gas recovering step of taking out, by set pressure, the thermally decomposed gas generated in the thermally decomposing step;
a liquid recovering step of separating liquid which is obtained by cooling the thermally decomposed gas taken out in the gas recovering step; and
a solid substance recovering step of taking out solid substance after the thermally decomposed gas is taken out from the input in the gas recovering step.

6. The multistep utilizing method of organic matter according to claim 5, wherein set temperature in the moisture adjusting step is 200°C or higher,
set temperature in the thermally decomposing step is 230°C or higher, and
set pressure in the gas recovering step is 1 Mpa or higher.

7. The multistep utilizing method of organic matter according to claim 5 or 6, further comprising a press fitting step for throwing in pressurized hot water of 120°C or higher and 300°C or lower after the moisture adjusting step and before the gas recovering step.

8. The multistep utilizing method of organic matter according to any one of claims 5 to 7, wherein
the solid substance which is taken out in the solid substance recovering step is activated carbon.

9. The multistep utilizing method of organic matter according to any one of claims 5 to 8, wherein the input includes hydrocarbon compound having boiling temperature of 300°C or higher, and
in the shearing step, the input including the hydrocarbon compound is kneaded at set temperature.
